**Europäisches Patentamt**

**European Patent Office**

**Office européen des brevets**

(19)

(11) Veröffentlichungsnummer: **0 096 385**
**B1**

(12) **EUROPÄISCHE PATENTSCHRIFT**

(45) Veröffentlichungstag der Patentschrift:
07.10.87

(51) Int. Cl.⁴: **C 04 B  35/08**, C 04 B  35/18

(21) Anmeldenummer: **83105507.4**

(22) Anmeldetag: **03.06.83**

(54) **Keramisches Material auf der Basis von Beryll.**

(30) Priorität: **04.06.82 DE 3221101**

(43) Veröffentlichungstag der Anmeldung:
**21.12.83 Patentblatt 83/51**

(45) Bekanntmachung des Hinweises auf die Patenterteilung:
**07.10.87 Patentblatt 87/41**

(84) Benannte Vertragsstaaten:
**CH DE FR GB IT LI NL SE**

(56) Entgegenhaltungen:
**DE - A - 1 671 115**
**DE - B - 1 282 539**

**F.H. NORTON: "Fine Ceramics", 1970, Seiten 151-154,**
**McGraw-Hill Book Company, New York, USA**
**SILIKATTECHNIK, Band 29, Nr. 5, Mai 1978, Seiten**
**154-155, Berlin, DE. W. HILLER et al.: "Pressen - ein**
**neues Formgebungsverfahren für Geschirrporzellan"**

(73) Patentinhaber: **Friedrichsfeld GmbH Keramik- und**
**Kunststoffwerke, Steinzeugstrasse 50,**
**D-6800 Mannheim 71 (DE)**

(72) Erfinder: **Vogel, Hansheinz, Ing. grad., Heidelberger**
**Strasse 76, D-6903 Neckargemünd 3 (DE)**
Erfinder: **Bertsch, Knut, Ing.-grad., Herbstweg 15,**
**D-6803 Edingen-Neckarhausen (DE)**
Erfinder: **Schnabel, Gerhard, Dipl.-Ing.,**
**Hardtwaldring 28, D-6836 Oftersheim (DE)**

(74) Vertreter: **Klose, Hans, Dipl.-Phys.,**
**Kurfürstenstrasse 32, D-6700 Ludwigshafen (DE)**

**Beschreibung**

Die Erfindung bezieht sich auf ein keramisches Material gemäss den Merkmalen des Oberbegriffs vom Patentanspruch 1.

In der DE-B-1 282 539 ist ein keramisches Material beschrieben, das aus einer Masse hergestellt wird, die bis zu 90 Gew.% an verunreinigtem, mineralischem Beryll enthält. Entsprechend dem jeweiligen Herkunftsort enthält der mineralische Beryll Verunreinigungen, und zwar im wesentlichen Quarz, Feldspat, Eisenhydroxid oder Glimmer. Das reine Mineral Beryll in der chemischen Zusammensetzung $3BeO.Al_2O_3.6SiO_2$ weist bekanntlich eine hohe Säurebeständigkeit und einen niedrigen Wärmeausdehnungskoeffizienten auf, der in dem Temperaturbereich von 20 bis 200 °C bei etwa 1,5 bis $2,0 \times 10^{-6}$ °C liegt. Gemäss der genannten DE-B wurde das keramische Material aus einer Masse hergestellt, die bis zu 90 Gew.% Beryll, mindestens 8 Gew.% frühsinterndem Ton und bis zu 2 Gew.% MgO oder entsprechende Mengen Magnesiumverbindungen und darüberhinaus Wasser enthielt. Die aus dieser Masse geformten Körper wurden getrocknet und bei einer Temperatur zwischen 1200 und 1350 °C gebrannt. Auch sind aus der DE-B Massen bekannt, deren Anteil an Beryll ganz oder teilweise durch synthetischen Beryll ersetzt wurde, der beim Brennen einer Mischung von BeO, Quarz und Ton in einem dem Beryll entsprechenden Verhältnis unter Zusatz von 0,5 bis 3 Gew.% MgO gebildet wurde, wobei der Gehalt an BeO und MgO nicht höher als 14 Gew.% war. Ggfs. konnte zusätzlich lithiumhaltiges Material in einer weniger als 1% Lithiumoxid entsprechenden Menge verwendet werden, sowie der Beryll in einer Körnung von weniger als 2 mm der Versatzmasse zugegeben werden. Beim Brand einer Masse mit Berylliumoxid oder Berylliumsalzen findet keine vollständige Umwandlung in die Mineralphase Beryll statt. Eine Synthese des Beryll erfolgte also nur in einem relativ geringen Teil und es entstanden andere Berylliumverbindungen, die im Scherben aufgrund einer relativ hohen Wärmedehnung unerwünscht sind. Hierbei hatte die Masse mit Berylliumoxid oder Berylliumsalzen einen höheren Anteil an Ton aufzuweisen, als die aus Beryll aufgebaute Masse.

Die vorbekannte Masse wurde in einem für Keramik gebräuchlichen Formgebungsverfahren, wie z.B. Strangpressen, plastisches Einformen oder Giessen zu entsprechenden Körpern geformt. Für derartige Formgebungsverfahren mussten der Masse ausser dem Beryll noch weitere, insbesondere tonige Rohstoffe, zugegeben werden, die jedoch die an sich vorteilhaften Eigenschaften des Berylls nachteilig beeinflussten. Es waren bereits 8 Gew.% Ton erforderlich, um selbst einfache, kleine Werkstücke im Giessverfahren herstellen zu können. Bei grösseren Werkstücken und plastischer Formgebung wurde sogar ein Tonanteil bis zu 50 Gew.% erforderlich. Das nach dem bekannten Verfahren hergestellte keramische Material enthält als kristalline Komponente Beryll und hatte einen steinzeug- oder porzellanähnlichen Charakter. Infolge des nicht unerheblich hohen Anteils von Ton in der Versatzmasse, wobei ggfs. auch Magnesiumoxid bzw. Lithiumoxid hinzugegeben wurden, wurde nur eine vergleichsweise geringe Laugenbeständigkeit erreicht.

Ferner ist es aus der Druckschrift «Fine Ceramics, F.H. Norton, McGraw-Hill Book Company, New York, USA, 1970, Seiten 151 bis 154» bekannt, Oxidkeramik nach dem isostatischen Pressverfahren herzustellen. Hierbei werden die in Form von Pulver oder Granulat vorliegenden Massen, die frei von $SiO_2$ sein können, in flexible Umhüllungen eingebracht und einem allseitigen nahezu gleichförmigen Pressdruck in der Grössenordnung von 1000 bis 2000 bar ausgesetzt. Die derart erhaltenen Formkörper werden nachfolgend entsprechend dem jeweiligen Oxidmaterial gesintert.

Der Erfindung liegt die Aufgabe zugrunde, das eingangs genannte keramische Material dahingehend weiterzuentwickeln, dass verbesserte Materialeigenschaften, und zwar vor allem eine hohe Temperaturwechselbeständigkeit, erreicht werden.

Die Lösung dieser Aufgabe erfolgt gemäss den im kennzeichnenden Teil von Patentanspruch 1 angegebenen Merkmalen.

Weitere Merkmale des keramischen Materials sind den Patentansprüchen 2–5 zu entnehmen.

Das vorgeschlagene keramische Material, das einen hohen Anteil der Mineralphase Beryll in homogener Verteilung aufweist, zeichnet sich vor allem durch eine hohe Temperaturbeständigkeit aus. Durch Mahlen, und zwar auf eine Körnung von weniger als 60 μm, wird eine Erhöhung der aktiven Oberfläche der Masse erreicht und das Sintern kann bei niedrigeren Temperaturen erfolgen als bei gröberer Körnung. Die Aktivierung der Oberfläche erfolgt vor allem durch eisenfreie Feinstmahlung mit Schwermahlkugeln unter Verwendung von Wasser oder Alkohol; ein abgestufter Kornaufbau hat sich als vorteilhaft erwiesen. Eine solche Masse kann bei einem niedrigen Feuchtigkeitsgehalt im Bereich von 0,1 bis 0,6 Gew.% problemlos mittels Trockenpressverfahren, genannt sei hier das isostatische Pressen, verarbeitet werden, wobei ein derart hergestellter Formkörper nachfolgend einem Schrühbrand unterworfen wird. Ferner kann das Material in einem einmaligen Brand hergestellt werden. Bei der Herstellung können die für Strangpressen, plastisches Einformen und Giessen bisher erforderlichen Versatzanteile praktisch entfallen. Der Wärmeausdehnungskoeffizient liegt für Temperaturen zwischen 20 und 1000 °C im Bereich von 1,5 bis $2 \times 10^{-6}$ pro Grad Celsius. Das keramische Material ist ferner flüssigkeits- und gasdicht, was durch die sogenannte Fuchsindruckprüfung während zwei Stunden bei 400 bar bzw. einem bekannten Helium-Leckprüfgerät festgestellt werden konnte. Die genannte Fuchsindruckprüfung wird bekanntlich bei den Elektroporzellanen, allerdings bei niedrigerem Druck, durchgeführt. Die Festigkeit des keramischen Materials entspricht mindestens der von üblichen Porzellanwerkstoffen. In der nachfolgenden Tabelle sind die massgebenden Eigenschaften des erfindungsgemässen keramischen Materials im Vergleich zu bekannten Werkstoffen angegeben.

Aus obiger Tabelle ist zu entnehmen, dass bei dem erfindungsgemässen keramischen Material die Biegefestigkeit im Bereich von 70 bis 90 N/mm² liegt, und somit wesentlich über den Werten der bekannten Werkstoffe liegt. Überwiegend wird

| | Biege- gestigkeit N/mm² | Wasser- aufnahme Gew.% | Wärme- ausdehnungs- koeffizient zwi- schen 20 und 200° C:x$10^{-6}$K$^{-1}$ |
|---|---|---|---|
| erfindungsgemä- ßes keramisches Material | 70-80-90 | 0 | 1,5-1,8-2 |
| Zum Vergleich Beryllhalt. Stein- zeug gem. DE-PS 1 282 539 | 25 | 0,6 | 2,6 |
| Mullitisches Steinzeug | 40 | 0,4 | 4,0 |
| Cordierit- Steinzeug | 40 | 0,6 | 2,4 |
| Techn. Hart- porzellan | 70 | 0 | 4,3 |

eine Biegfestigkeit von 80 N/mm² erreicht, wie es durch das Unterstreichen der Zahl 80 zum Ausdruck gebracht werden soll. Ferner ist auf eine weitere bedeutende Eigenschaft hinzuweisen, nämlich auf die absolute Dichte, welche durch die erreichbare Wasseraufnahme von 0 charakterisiert ist.

Darüberhinaus lässt die Tabelle deutlich erkennen, dass der Wärmeausdehnungskoeffizient des erfindungsgemässen keramischen Materials im Bereich von 1,5 bis 2, bevorzugt etwa $1,8 \times 10^{-6}$K$^{-1}$ in dem angegebenen Temperaturbereich beträgt und somit wesentlich günstiger ist als bei den bekannten Werkstoffen.

In der nachfolgenden Tabelle ist das Korrosionsverhalten, und zwar die Säurelöslichkeit bei kochender $H_2SO_4$ sowie die Laugenlöslichkeit bei kochender NaOH angegeben. Dieser Tabelle ist deutlich entnehmbar, dass das erfindungsgemässe keramische Material, welches auch als Sinter- Beryll bezeichnet werden kann, erheblich weniger angegriffen wird als die bekannten Materialien; dies gilt um so mehr bei höheren Konzentrationen der Prüfflüssigkeit.

| | Säurelöslichkeit [*] $H_2SO_4$ kochend | | Laugenlöslichkeit [*] NaOH kochend | | | |
|---|---|---|---|---|---|---|
| | 70%ig | 80%ig | 1%ig | 5%ig | 10%ig | 20%ig |
| erfindungsgemä- ßes keramisches Material | 0,4% | 0,4% | 2% | 5% | 10% | 18% |
| Zum Vergleich: | | | | | | |
| Beryllhalt. Stein- zeug gem. DE-PS 1 282 539 | 0,6% | 1,3% | 3% | 10% | 18% | 32% |
| Mullitisches Steinzeug | 0,4% | 2,0% | 5% | 25% | 45% | 60% |
| Cordierit- Steinzeug | 21,0% | 22,0% | 3% | 15% | 20% | 40% |
| Techn. Hart- porzellan | 0,2% | 0,8% | 2% | 26% | 49% | 57% |

[*] Gelöster Anteil nach 6-stündigem Kochen von 3 g des keramischen Materi- als, gekörnt und abgesiebt auf 0,63 bis 0,8 mm, in 150 ml Prüfflüssigkeit der angegebenen Konzentration.

Aus den obigen Tabellen ist zu entnehmen, dass das erfindungsgemässe keramische Material aufgrund seiner vergleichsweise geringen Wärmedehnung wesentlich unempfindlicher gegen Temperaturwechsel ist als bekannte keramische Materialien, welche bisher in der Chemietechnik zur Anwendung gelangten. Es hat sich gezeigt, dass beispielsweise, Chemiepumpen, Hähne und Ventile aus dem erfindungsgemässen Werkstoff auch schroffe Temperaturänderungen um 140 K aushalten. Die bereits gute Beständigkeit von Steinzeug und Hartporzellan gegenüber Säuren, Salzlösungen und Lösungsmitteln wird durch das erfindungsgemässe Material übertroffen und darüberhinaus wird auch die Beständigkeit gegenüber starker alkalischer Beanspruchung wesentlich verbessert. Es sei besonders hervorgehoben, dass die hervorragende Korrosionsbeständigkeit u.a. auch darauf beruht, dass das erfindungsgemäss hergestellte Material völlig dicht gesintert ist und nicht nur flüssigkeitsdicht, sondern auch vollkommen gasdicht ist. Darüberhinaus ist von massgebender Bedeutung, dass das Material im gebrannten Zustand durch Schleifen bearbeitet werden kann. Hierbei sind die hohen erreichbaren Massgenauigkeiten mit denen der Metallverarbeitung ohne Einschränkung vergleichbar. Ferner sei die gute Gleiteigenschaft des erfindungsgemässen Materials im polierten Zustand hervorgehoben. Ferner sei festgehalten, dass die Dichte des Materials bei 2,6 kg/dm$^3$ liegt, der Elastizitätsmodul 80 000 N/mm$^2$ beträgt und eine Härte nach Mohs 6–7 erreicht wird. Darüberhinaus wurde eine Wärmeleitfähigkeit bei 170 °C von 3W/m · K erreicht. Eine hervorragende Eigenschaft des erfindungsgemässen Materials ist ferner durch eine hohe Beständigkeit bei Thermoschock gegeben. Aufgrund der nicht unwesentlich verbesserten Temperaturwechselbeständigkeit werden für das erfindungsgemässe Material neue Einsatzgebiete erschlossen, welche z.B. im Bereich der Elektrotechnik oder des Maschinenbaues, aber auch im Bereich der Anwendung bei höheren Temperaturen liegen können.

Die Formgebung erfolgt bevorzugt durch Trokkenpressen, insbesondere durch isostatisches oder quasi-isostatisches Pressen, bei einem Druck von 600 bis 2000 bar, vorzugsweise 1000 bis 1200 bar. Es hat sich gezeigt, dass bei kleinen Abmessungen die Formkörper durch Trockenpressen in besonders einfacher und zweckmässiger Weise geformt werden können. Es sei festgehalten, dass die Formkörper auch in Pressformen bei einachsiger Druckbeaufschlagung mittels Presskolben oder dergl. geformt werden. Durch das isostatische oder quasi-isostatische Pressen werden in überraschend einfacher Weise gute Materialeigenschaften erreicht. Grössere Formkörper werden durch Schlickergiessen geformt, wodurch eine besonders wirtschaftliche Formgebung und Fertigung erreicht wird.

Es können Sinterhilfsmittel zugegeben werden, insbesondere Aluminiumoxid, Feldspat, Ton, Kaolin oder Glimmer, soweit letztere nicht als natürliche Verunreinigung in dem Beryll enthalten sind.

Aufgrund dieser Sinterhilfsmittel wird die Handhabung bei der Verarbeitung nicht unwesentlich verbessert.

Die Brenntemperatur liegt bei 1200–1400 °C.

Vorteilhaft besteht die Masse aus näherungsweise 100 Gew.% Beryll, wobei die Reinheit zweckmässig gegen 100% geht.

Wird kein natürlicher Beryll verwendet, so kann dieser aus einem berylliumoxidhaltigen Versatz im keramischen Brand synthetisiert werden. Dies wird durch einen Zusatz von 0,5 bis 3 Gew.% Magnesiumoxid oder einer entsprechenden Menge eines Magnesiumoxid enthaltenden Materials, wie zum Beispiel Talkum als Mineralisator zu der Berylliumoxid enthaltenden Masse erreicht.

Eine weitere Verringerung der Wärmeausdehnung und damit eine noch bessere Temperaturwechselbeständigkeit des keramischen Werkstoffes wird dadurch erreicht, dass der Masse zusätzlich ein lithiumhaltiges Material in weniger als 1 Gew.% Lithiumoxid entsprechender Menge zugesetzt wird.

Nach Erreichen einer Mahl-Feinheit mit einer Körnung von weniger als 60 μm und mit einem abgestuften Kornaufbau wird die Masse erforderlichenfalls getrocknet und vorzugsweise mit einer Schlagstiftmühle trocken aufgemahlen und zu abgestufter Körnung abgesiebt. Alternativ kann auch nass aufbereitet und der dabei anfallende Schlikker in einem Sprühtrockner entwässert werden, wobei ein rieselfähiges Granulat gewonnen wird. Es hat sich gezeigt, dass dieses Korngemisch bei einem Feuchtigkeitsgehalt im Bereich von 0,1 bis 0,6 Gew.%, vorzugsweise 0,2 bis 0,3 Gew.% mittels Trockenpressverfahren, vorzugsweise isostatischem Trockenpressverfahren bei einem Druck von 600 bis 2000 bar zu handhabbaren Formkörpern verarbeitet werden kann.

Die genannten Formkörper werden in einem nachfolgenden Schrühbrand in oxidierender Atmosphäre auf 950 bis 1050 °C aufgeheizt und abgekühlt. Die Formkörper werden nunmehr insbesondere durch Schleifen, Drehen, Fräsen oder Bohren bearbeitet, wobei die Brennschwindung des sich anschliessenden keramischen Brandes berücksichtigt wird.

**Patentansprüche**

1. Keramisches Material auf der Basis von mineralischem oder synthetischem Beryll, welches temperatur-, säure- und laugenbeständig ist, welches einen niedrigen Wärmeausdehnungskoeffizienten, einen flüssigkeits- und gasdichten Scherben sowie eine hohe mechanische Festigkeit aufweist, dadurch gekennzeichnet, dass es aus einer Masse mit einem Anteil von mindestens 80 Gew.% der Mineralphase Beryll und mit einer Körnung von weniger als 60 Mikrometern hergestellt ist, dass die Biegefestigkeit grösser als 70 N/mm$^2$ ist und dass der Elastizitätsmodul etwa 80 000 N/mm$^2$ beträgt.

2. Keramisches Material nach Anspruch 1, dadurch gekennzeichnet, dass der Wärmeausdehnungskoeffizient zwischen 20 und 200° Celsius im Bereich von 1,5 bis 2, bevorzugt bei 1,8 mal $10^{-6}$ pro Grad liegt.

3. Keramisches Material nach Anspruch 1 oder 2, dadurch gekennzeichnet, dass eine Wasseraufnahme von Null gegeben ist.

4. Keramisches Material nach einem der Ansprüche 1 bis 3, dadurch gekennzeichnet, dass die Säurelöslichkeit bei kochender Schwefelsäure ($H_2SO_4$) für eine 70%ige oder 80%ige Konzentration bei 0,4% liegt.

5. Keramisches Material nach einem der Ansprüche 1 bis 4, dadurch gekennzeichnet, dass die Laugenlöslichkeit für kochende Natronlauge (NaHO) für eine 1%ige Konzentration bei 2% und/oder für eine 5%ige Konzentration bei 5% und/oder für eine 10%ige Konzentration bei 10% und/oder für eine 20%ige Konzentration bei 18% liegt.

## Claims

1. Ceramic material based on mineral or synthetic beryl which is resistant to temperature, acids and alkalies and has a low coefficient of thermal expansion, a liquid-tight and gas-tight body and high mechanical strength, characterised in that it is produced from a mass having a content of at least 80% by weight of the mineral phase beryl and having a grain of less than 60 micrometers, in that the bending strength is greater than 70 N/mm² and in that the modulus of elasticity is about 80,000 N/mm².

2. Ceramic material according to Claim 1, characterised in that the coefficient of thermal expansion at between 20 and 200° Celsius lies in the range of from 1.5 to 2, preferably $1.8 \times 10^{-6}$ per degree.

3. Ceramic material according to Claim 1 or 2, characterised in that water absorption is zero.

4. Ceramic material according to one of Claims 1 to 3, characterised in that the acid solubility in the case of boiling sulphuric acid ($H_2SO_4$) is 0.4% for a 70% or 80% concentration.

5. Ceramic material according to one of Claims 1 to 4, characterised in that the alkali solubility for boiling caustic soda solution (NaHO) is 2% for a 1% concentration and/or 5% for a 5% concentration and/or 10% for a 10% concentration and/or 18% for a 20% concentration.

## Description

1. Matière céramique à base de béryl minéral ou synthétique, qui est résistante à la température, aux acides et aux bases, qui présente un faible coefficient de dilatation thermique, une pâte étanche aux liquides et aux gaz, ainsi qu'une haute résistance mécanique, caractérisé en ce que cette matière est produite à partir d'une masse possédant une teneur d'au moins 80% en poids en phase minérale béryl, et possédant une grosseur de grain de moins de 60 microns, en ce que la résistance à la flexion est supérieure à 70 N/mm² et en ce que le module d'élasticité est d'environ 80 000 N/mm².

2. Matière céramique selon la revendication 1, caractérisée en ce que le coefficient de dilatation thermique, mesuré entre 20 et 200° Celsius, est de l'intervalle de 1,5 à 2, de préférence $1,8 \times 10^{-6}$ par degré.

3. Matière céramique selon la revendication 1 ou 2, caractérisée en ce qu'elle possède une absorption d'eau nulle.

4. Matière céramique selon l'une des revendications 1 à 3, caractérisée en ce que la solubilité acide dans l'acide sulfurique bouillant ($H_2SO_4$) est d'environ 0,4% pour une concentration de 70% ou 90%.

5. Matière céramique selon l'une des revendications 1 à 4, caractérisée en ce que la solubilité basique dans une lessive de soude bouillante (NaHO) est d'environ 2% pour une concentration de 1% et/ou de 5% pour une concentration de 5% et/ou de 10% pour une concentration de 10% et/ou de 18% pour une concentration de 20%.